# EUROPÄISCHE PATENTANMELDUNG

(11) **EP 3 053 820 A1**
(43) Veröffentlichungstag der Anmeldung: **10.08.2016**
(21) Anmeldenummer: 15198349.1
(22) Anmeldetag: 08.12.2015
(51) Int. Cl.: B62M 6/45

(54) **ANFAHRSTEUERUNG FÜR EIN ELEKTROFAHRRAD**

(30) Priorität: 05.02.2015 DE 102015202015
(71) Anmelder: ROBERT BOSCH GMBH, 70442 Stuttgart (DE)
(72) Erfinder: Schleszies, Markus, 6844 Altach (DE); Greiner, Rinaldo, 72762 Reutlingen (DE)

(57) **Zusammenfassung**

Mit der vorliegenden Erfindung soll speziell die besondere Anfahrsituation des Anschiebens mit anschließendem Aufspringen oder Aufschwingen auf den Sattel bei angetriebenen Zweirädern wie Elektrofahrrädern oder Pedelecs behandelt werden. Hierzu ist sowohl eine Verarbeitungseinheit (100), z.B. ein Steuergerät für den Antrieb des Zweirads, sowie ein Verfahren vorgesehen, mit dessen Hilfe der Antrieb zumindest zeitweise bei der Erkennung dieser besonderen Anfahrsituation deaktiviert, verzögert oder gänzlich unterbunden wird. Durch die Verhinderung der Erzeugung eines Vortriebs werden Situationen vermieden, bei denen der Fahrer des Zweirads nicht mit einem zusätzlichen Antrieb rechnet, so dass das Zweirad beherrschbar bleibt.

## Beschreibung

Die Erfindung betrifft eine Verarbeitungseinheit zur Erzeugung von Ansteuersignalen eines Motors, der für den Antrieb eines Zweirads, insbesondere eines Elektrofahrrads, vorgesehen ist sowie ein Verfahren, welches in einer derartigen Verarbeitungseinheit abläuft.

### Stand der Technik

Bei den immer beliebter werdenden elektrisch angetriebenen Zweirädern wie Elektrofahrrädern oder Pedelecs ist ein elektrischer Motor vorgesehen, der in Abhängigkeit von der Betätigung der Pedale einen zusätzlichen Vortrieb des Zweirads zur manuellen Tretkraft ermöglicht. Typischerweise wird dabei der Unterstützungsgrad, mit dem der elektrische Motor zusätzlich zur manuellen Betätigung für den Antrieb betrieben wird, in Abhängigkeit von der Tretbetätigung der Pedale bzw. der Kurbel durch den Fahrer vorgegeben.

Bei der Benutzung von Elektrofahrrädern oder Pedelecs ist darauf zu achten, dass einige Verhaltensmuster, die bei einem konventionellen Fahrrad ohne Konsequenzen sind, bei einem angetriebenen Fahrrad zu einer Aktivierung des Motors führen können.

So ist bei einem besonderen Anfahrvorgang das einbeinige Aufstehen auf eine Pedale, z.B. mit gleichzeitigem "hoppelnden" Schritt, zum Anschieben des Fahrrads mit nachfolgendem Aufsitzen auf den Sattel unter Umständen mit einer Aktivierung des Motors und somit einer ungewollten automatischen Vorwärtsbewegung verbunden. Wird mit dieser zusätzlichen Vorwärtsbewegung nicht gerechnet, kann es zu Problemen beim Anfahren kommen.

Aus der nicht vorveröffentlichten DE 10 2014 212758 A1 ist ein System zum Diebstahlschutz bekannt, bei dem in Abhängigkeit von einer Identifikation des Fahrers der Antrieb eines Zweirads blockiert werden kann. Die Identifikation erfolgt dabei durch typische individuelle Verhaltensweisen während des Betriebs, u.a. auch während des Anfahrens.

### Offenbarung der Erfindung

Mit der vorliegenden Erfindung soll speziell die eingangs beschriebene besondere Anfahrsituation des Anschiebens mit anschließendem Aufspringen oder Aufschwingen auf den Sattel bei angetriebenen Zweirädern wie Elektrofahrrädern oder Pedelecs behandelt werden. Hierzu ist sowohl eine Verarbeitungseinheit, z.B. ein Steuergerät für den Antrieb des Zweirads, sowie ein Verfahren vorgesehen, mit dessen Hilfe der Antrieb zumindest zeitweise bei der Erkennung dieser besonderen Anfahrsituation deaktiviert, verzögert oder gänzlich unterbunden wird. Durch die Verhinderung der Erzeugung eines Vortriebs werden Situationen vermieden, bei denen der Fahrer des Zweirads nicht mit einem zusätzlichen Antrieb rechnet, so dass das Zweirad beherrschbar bleibt.

Die zentrale Idee hinter der Erfindung liegt dabei darin, dass mittels eines Gewichtssensors das Gewicht auf dem Sattel des Zweirads erfasst wird. Solange kein Gewicht auf dem Sattel erkannt wird, das Zweirad sich jedoch in Bewegung befindet, kann auf eine besondere Anfahrsituation der eingangs geschilderten Art geschlossen werden. Alternativ kann es sich auch um einen normalen Schiebevorgang handeln, bei dem ebenfalls der Motor deaktiviert werden kann, da eine unbeabsichtigte Bewegung der Pedale, z.B. falls sie an einem Hindernis hängen bleibt, ebenfalls zu einem nichtbeabsichtigten Vortrieb führen könnte.

Neben der Erfassung des Gewichts auf dem Sattel ist auch die Erfassung der Bewegung des Zweirads oder eines Teils des Zweirads notwendig, um die erforderlichen Bedingungen für das Unterbinden des Ansteuersignals abzuleiten. Bei dem hierzu notwendigen Bewegungssensor kann es sich sowohl um einen Geschwindigkeitsmesser an einem der Räder handeln als auch um einen Sensor, der die Bewegung einer oder beider Pedalen oder der Tretkurbel erfasst. Darüber hinaus sind jedoch auch andere Sensoren oder Sensordaten dazu geeignet, entsprechende Bewegungsgrößen abzuleiten. Denkbar wäre hier beispielsweise die Verwendung von GPS-Daten oder einem Beschleunigungssensor.

Statt dem Unterbinden der Erzeugung des Ansteuersignals beim Vorliegen der vorstehend genannten Bedingungen kann auch das Weiterleiten des Ansteuersignals unterbunden werden. Hierzu gleichbedeutend soll auch die aktive Deaktivierung des Motorantriebs darunter verstanden werden, indem der Vortrieb durch den Motor unterbunden wird.

Um die besondere Anfahrsituation gegenüber anderen Fahrsituationen im normalen Betrieb des Zweirads abzugrenzen, kann vorgesehen sein, die Unterbindung der Motoransteuerung nur unterhalb einer Geschwindigkeitsgrenze vorzunehmen. Hierzu bietet sich eine Geschwindigkeitsschwelle von 2 bis 7 km/h an, die der typischen Gehgeschwindigkeit entspricht.

Weiterhin ist möglich, dass die Ansteuerung des Motors beim Vorliegen eine Bewegung des Zweirads ohne eine Gewichtsbelastung des Sattels verzögert wird, z.B. um 2 s, 5 s oder 10 s. Durch diesen Vorgang wird verhindert, dass beim Aufsteigen ein Vortrieb erzeugt wird, durch den das Zweirad in diesem Zustand, in der der Fahrer noch nicht sicher auf dem Zweirad sitzt, in eine schwer beherrschbare Situation gerät. Nach einer gewissen Zeit ist jedoch davon auszugehen, dass der Fahrer sich auf den Sattel gesetzt hat und den Lenker fest im Griff hat, so dass auch ein zusätzlicher Vortrieb beherrscht werden kann.

Es kann auch vorgesehen sein, dass bei der Erkennung der besonderen Anfahrtssituation eine gestufte Inbetriebnahme des elektrischen Antriebs des Zweirads erfolgt. Hierzu wird in einer ersten Phase zunächst der elektrische zusätzliche Antrieb des Zweirads unterbunden. In einer zweiten Phase wird eine reduzierte Antriebsleistung durch den am Zweirad befindlichen Motor ermöglicht. Dabei wird als normale d.h. nicht reduzierte Antriebsleistung diejenige planmäßige Antriebsleistung angesehen, die aufgrund einer Benutzung des Zweirads im normalen Betrieb als Unterstützungsgrad vorgesehen ist. In der dritten Phase wird dabei die volle planmäßige Antriebsleistung durch den Motor zur Verfügung gestellt, wie sie nach dem eingestellten Unterstützungsgrad z.B. in Abhängigkeit der Tretkraft an der Kurbel oder der Pedale zur Verfügung gestellt werden soll.

Statt einer ausgeprägten gestuften Anpassung der Antriebsleistung von der ersten zur dritten Phase kann auch eine kontinuierliche Anpassung erfolgen, beispielsweise über 10 s. Hierbei kann sowohl ebenfalls eine erste Phase mit einer gänzlichen Unterdrückung des Antriebs vorgesehen sein oder ein sehr geringer Anstieg. Dieser geringe Anstieg kann in der Art gestaltet sein, dass der Fahrer des Zweirads kaum etwas von dem zusätzlichen Vortrieb mitbekommt, der Motor jedoch schon anläuft, um schneller den gewünschten Vortrieb liefern zu können.

Optional kann auch vorgesehen sein, dass der Motor bei der besonderen Anfahrsituation in einem Leerlauf betrieben wird, z.B. in der ersten Phase.

In einer weiteren Ausgestaltung der Erfindung kann auch das zeitliche Verhalten der Bewegung des Zweirads berücksichtigt werden. So kann erkannt werden, ob das Zweirad schon länger in Bewegung war oder gestanden ist. Hierdurch lässt sich eine Prognose ableiten, ob eine Anfahrsituation z.B. an einer Ampel oder zur Inbetriebnahme des Zweirads vorliegt. Während in der ersten Anfahrsituation eine kürzere Unterbindung der Aktivierung des Antriebs notwendig ist, kann in der zweiten Situation eine längere Unterbindung sinnvoll sein.

Darüber hinaus kann auch das zeitliche Verhalten der Bewegungsgröße ein Indiz für die besondere Anfahrsituation sein. Gerade beim Aufsetzen des Fußes auf die Pedale mit einem Anschiebvorgang mit nachfolgendem Überschwingen des anderen Beines über den Sattel beim Aufsteigen, können am Zweirad typische Bewegungsmuster erkannt werden. Hierzu kann beispielsweise auch das Signal eines Beschleunigungssensors, ein Trittfrequenzsensor oder Drehmomentsensor an der Pedal oder an der Kurbel hilfreich sein.

Weiterhin kann auch die Neigung mittels eines entsprechenden Sensors sowohl seitlich zur Fahrbahn als auch in Form einer Steigung erfasst werden, um in die Erkennung der besonderen Anfahrsituation einzufließen. So kann es vorkommen, dass ein Fahrer gerade am Berg aus dem Sattel steigt, um mehr Kraft in die Pedale zu bringen, so dass auf dem Sattel keine Gewichtskraft mehr lastet. In diesem Fall könnte auch die Geschwindigkeit eine zu langsame Bewegung anzeigen, so dass eine eventuelle Unterstützung durch den Antrieb deaktiviert wird. Wird hingegen sowohl die Steigung oder auch die zeitliche Historie der Bewegung berücksichtigt, lassen sich derartige Situationen voneinander abgrenzen. Ebenso kann eine große Schwankung zu beiden Seiten des Zweirads ein Indiz für eine Anfahr- oder Aufstiegssituation sein.

Optional kann auch vorgesehen sein, dass die Unterbindung der Ansteuerung des Antriebs mittels eines manuellen oder elektronischen Schlüssels erfolgt. So kann das Anschalten des Steuergeräts des Antriebs schon dazu führen, dass für eine gewisse Zeit der Antrieb zunächst deaktiviert bleibt. Dies kann beispielsweise durch einen Schlüssel in einem Schloss oder einen Aktivierungsschlüssel in Form eine Pin-Codes erfolgen.

Weitere Vorteile ergeben sich aus der nachfolgenden Beschreibung von Ausführungsbeispielen bzw. aus den abhängigen Patentansprüchen.

### Kurze Beschreibung der Zeichnungen

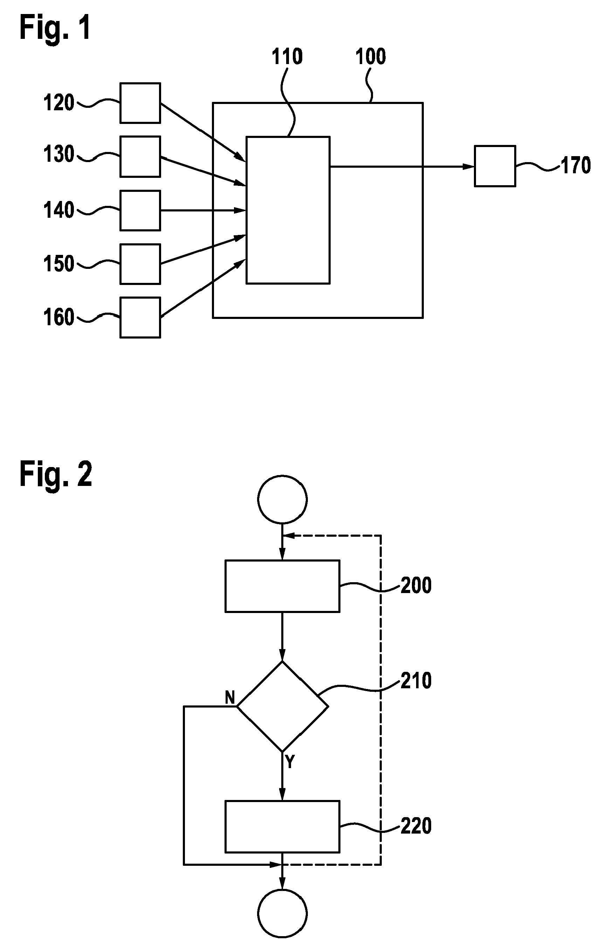

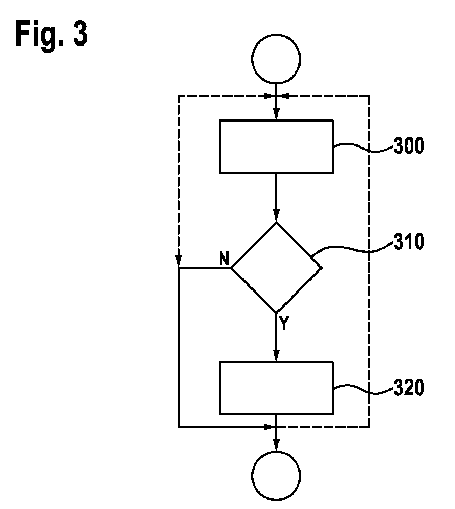

Die Figur 1 zeigt in einem Blockschaltbild schematisch eine mögliche Realisierung der Erfindung. Mit den Flussdiagrammen der Figuren 2 und 3 werden mögliche Algorithmen beschrieben, mit denen die Erfindung umgesetzt werden kann.

### Offenbarung der Erfindung

Die erfindungsgemäße Vorrichtung 100 zur Anfahrsteuerung eines wenigstens teilweise elektrisch antreibbaren Zweirads, z.B. ein Elektrofahrrad oder ein Pedelcs, wie sie beispielsweise in einem Steuergerät realisiert werden kann, weist eine Auswerteeinheit 110 auf, wie sie in der Figur 1 dargestellt ist. In dieser Auswerteeinheit 110 kann wenigstens eines der Verfahren gemäß der Ablaufdiagramme der Figuren 2 oder 3 ablaufen, mittels der die Anfahrbedingungen erfasst und die Ansteuersignale für einen Motor 170 des Zweirads abgeleitet werden.

Zur Erkennung einer besonderen Anfahrbedingung des Zweirads wie sie eingangs beschrieben worden ist, kann die Auswerteeinheit 110 die Sensorgrößen eines oder mehrerer verschiedener Sensoren erfassen, die entweder bereits für andere Steuerungs- und/oder Regelungszwecke an dem elektrisch antreibbaren Zweirad vorhanden sind oder speziell für die Erkennung der Anfahrbedingung am Zweirad angebracht sind.

Mit einem Pedalsensor 120, z.B. ein Drehmomentensensor, ein Kraftsensor oder ein Bewegungssensor kann die Bewegung und somit die Drehung der Pedale erfasst werden. Mittels eines Gewichtssensors 130 ist die Erfassung des Gewichts auf einem Sattel vorgesehen. Mit Hilfe dieses Gewichtssensors 130 kann entweder eine Erfassung eines Mindestgewichts oder auch die Verteilung des Gewichts auf der Fläche des Sattels vorgenommen werden. Weiterhin kann vorgesehen sein, die Neigung des Zweirads mit einem entsprechenden Neigungssensor 140 zu erfassen. Die Bewegung sowie die Geschwindigkeit, die gerade beim Anfahren unterhalb eines Schwellwerts liegen, kann mit einem Geschwindigkeitssensor 150 erfasst werden. Durch die zeitliche Berücksichtigung des Geschwindigkeitssignals kann zudem auch die eingangs erwähnte einbeinige Anschiebetechnik erkannt werden. Darüber hinaus können aber auch die Signale anderer Sensoren 160 erfasst werden, mit deren Hilfe auf eine Anfahrt- oder Anschiebesituation geschlossen werden kann. Beispielhaft sei hier ein Beschleunigungssensor oder ein GPS-Sensor erwähnt. Auch die Inbetriebnahme des Zweirads kann zur Erkennung dieser Situationen genutzt werden, z.B. mittels der Erfassung eines Schlüssels oder dem Startbefehl in der Motorsteuerung. Derartige Informationen lassen sich auch ohne gesonderten Sensor in Form von elektronischen Signalen in der Auswerteeinheit 110 auswerten.

Mit dem Algorithmus gemäß der Figur 2 wird ausgehend von einer erkannten besonderen Anfahrsituation bzw. einer allgemeinen Schiebesituation des Zweirads eine Aktivierung und/oder ein Betrieb des Motors unterbunden, reduziert oder hinausgezögert. Hierzu wird im ersten Schritt 200 die Bewegung des Zweirads erfasst, z.B. in Form einer Ja/Nein-Information. Wird im nächsten Schritt 210 eine Anfahrbedingung oder eine Schiebesituation erkannt, wird im nachfolgenden Schritt 220 eine Sperre, Deaktivierung oder Verzögerung des elektrischen Antriebs des Zweirads vorgenommen, bevor der Algorithmus beendet wird. Liegt dagegen keine Anfahrbedingung vor, z.B. indem die zeitliche Vorgeschichte des Betriebs des Zweirads berücksichtigt wird, entfällt der Schritt 220 und der Algorithmus kann beendet werden.

Der Algorithmus in Figur 2 kann wahlweise in regelmäßigen zeitlichen Abständen oder aufgrund einer erkannten besonderen Anfahr- bzw. Schiebesituation gestartet werden. Alternativ kann auch eine Regelschleife vorgesehen sein, die erneut die Bewegung des Zweirads im Schritt 200 erfasst, bevor der Algorithmus beendet wird.

Im einfachsten Fall der Erkennung einer Anfahr- oder Schiebesituation besteht darin, dass in Schritt 210 das Vorliegen eines Gewichts auf dem Sattel überprüft wird. Hierzu wird das Sensorsignal des Gewichtssensors 130 erfasst und überprüft. Wird erkannt, dass der Fahrer nicht auf dem Sattel sitzt, wird der Antrieb gesperrt, deaktiviert oder verzögert.

Die weitere Erkennung einer Anfahr- oder auch einer Schiebesituation, bei der ebenfalls die Aktivierung des Motors unterbunden werden sollte, wird beispielhaft anhand dem Flussdiagramm der Figur 3 beschrieben. Dabei wird in einem ersten Schritt 300 eine Größe erfasst, die die Bewegung, die Geschwindigkeit und/oder die Neigung des Zweirads repräsentiert. Im Gegensatz zum Schritt 200 wird dabei wenigstens eine konkrete Größe der Bewegung erfasst, von der die Anfahr- oder Schiebesituation abgeleitet werden kann. Typische Größen können dabei neben dem Geschwindigkeitssignal des Zweirads die Drehgeschwindigkeit und/oder das Drehmoment der Pedale bzw. die Beschleunigung des Zweirads sein. Zusätzlich wird auch die Sitzbelegung des Sattels erfasst, z.B. mittels des bereits erwähnten Gewichtssensors 130. Optional kann auch vorgesehen sein, die Startbedingung des elektrischen Antriebs des Zweirads zu erfassen, z.B. indem die Aktivierung durch einen Schlüssel oder einen Pin im Steuergerät bzw. im Anzeigeelement des Systems erfasst wird. In einer weiteren Ausgestaltung kann auch vorgesehen sein, dass das zeitliche Verhalten, d.h. die Historie der Bewegung, der Geschwindigkeit, der Neigung, der Sitzbelegung und/oder der Aktivierung des Antriebssystems erfasst wird, um eine Prognose für das aktuelle Nutzungsverhalten des Zweirads erstellen zu können.

Im nachfolgenden Schritt 310 wird aus der einzelnen Größen oder aus der Zusammenschau aller im Schritt 300 erhobenen Größen eine Bewertung der Nutzungssituation abgeleitet, um daraus die beschriebene besondere Anfahrsituation und/oder Schiebesituation zu erkennen. Wird eine derartige besondere Anfahrsituation erkannt, so wird im nächsten Schritt 320 eine entsprechende Information zur Ansteuerung des Motors erzeugt. Falls die Größen keine Anfahrsituation und/oder Schiebesituation erkennen lassen, kann der Algorithmus beendet werden oder erneut mit Schritt 300 gestartet werden. Optional kann auch vorgesehen sein, dass der Algorithmus selbst bei erkannter besonderer Anfahr- und/oder Schiebesituation mit dem Schritt 300 weiterverfolgt wird, falls eine Deaktivierung des Antriebs nicht notwendig ist.

Ein wesentliches Indiz für die Erkennung der besonderen Art der Anfahrsituation ist die Gewichtsbelastung des Sattels. Gerade durch das einbeinige Aufstehen auf die Pedale und das Anschieben erfolgt das Aufsitzen auf den Sattel erst nachdem sich das Zweirad schon in Bewegung gesetzt hat. Eine ähnliche Bedingung wird auch bei einem normalen Schiebevorgang vorliegen. Wird daher eine Bewegung des Zweirads erkannt, bei dem kein Gewicht auf dem Sattel registriert wird, kann der Antrieb vollständig deaktiviert werden, in der Leistung reduziert, um den Vortrieb zu reduzieren, oder zeitlich verzögert angesteuert werden. So kann beispielsweise vorgesehen sein, den Antrieb nach einer erkannten besonderen Anfahrsituation erst nach 2, 5 oder 10 s vollständig, abgestuft oder kontinuierlich mit steigender Leistung zu betreiben.

Dabei kann der Antrieb durch den elektrische Motor des Zweirads beispielsweise in einer ersten Phase gänzlich unterbunden werden. In einer zweiten Phase kann eine reduzierte Antriebsleistung erzeugt werden, verglichen mit der normalen Antriebsleistung des eingestellten Unterstützungsprofils, beispielsweise in Abhängigkeit der Drehfrequenz oder des Drehmoments der Kurbel. Schlussendlich kann in der dritten Phase die volle Antriebsleistung erzeugt werden, die der eingestellten Unterstützung entspricht. Denkbar wäre beispielsweise die Ansteuerung während der ersten Phase 2 bis 3 s und die zweite Phase 3 bis 7 s dauern zu lassen. Anschließend erfolgt dann mit der dritten Phase die reguläre Ansteuerung des Zweirads, insbesondere eines Elektrofahrrads, wie sie einschlägig bekannt ist und die dem eingestellten Unterstützungsgrad entspricht.

In einer weiteren Ausgestaltung kann vorgesehen sein, dass zusätzlich auch die Geschwindigkeit des Zweirads berücksichtigt wird, z.B. indem aus einer Beschleunigungsgröße oder anhand von GPS-Daten auf die Geschwindigkeit geschlossen wird. Somit kann ausgeschlossen werden, dass der Motor während der Fahrt deaktiviert wird, wenn der Fahrer z.B. bei einem Anstieg sich kurzzeitig aus dem Sattel erhebt. Weiterhin kann vorgesehen sein, dass die Deaktivierung, Reduzierung oder Verzögerung des Antriebs nur unterhalb einer Geschwindigkeitsschwelle erfolgt, die typisch für eine derartige besondere Anfahrsituation ist. Typische Werte für diese Geschwindigkeitsschwelle können sein 2 km/h, 5 km/h oder 7 km/h.

Alternativ oder zusätzlich kann auch das zeitliche Verhalten der Bewegung des Zweirads berücksichtigt werden. So ist bei der beschriebenen Art des Anfahrens ein Schwanken der Geschwindigkeit bzw. der Beschleunigung des Zweirads zu beobachten, da das Anschieben mit dem Aufsitzen nicht kontinuierlich sondern in Schüben erfolgt. Wird daher mittels der Bewegungsgröße eine derartige sprunghafte oder schwankende Änderung der Geschwindigkeit und/oder Beschleunigung erfasst, kann das auf die besondere Anfahrsituation hindeuten. Gerade bei der Beschleunigungsgröße können bei einem derartigen Anfahren positive und negative Werte beobachtet werden.

Weiterhin kann auch die Bewegung und/oder die Stellung der Pedalen berücksichtigt werden, um die besondere Anfahrsituation zu erkennen. So wird bei dem einbeinigen Aufsteigen die Pedale während des Anfahrens nur gering aus der unteren Stellung heraus bewegt. Darüber hinaus bewegt sich die Pedale in einem kleinen Kreisradius während des Anschiebens vor und zurück. Mit der Verwendung eines Drehmomentensensors oder eines Kraftsensors an der Pedale oder in der Tretkurbel kann zusätzlich auch erkannt werden, ob auf die Pedale eine größere Kraft oder eine größere Masse als im normalen Betrieb aufgebracht wird. Zumindest kurzfristig sollte bei dieser Form des Anfahrens das gesamte Gewicht des Fahrers auf einer Pedale abgestützt sein.

Auch die Neigung kann optional zur Erkennung der besonderen Anfahrbedingung verwendet werden. Dabei kann sowohl die seitliche Neigung aber auch die Längsneigung, d.h. die Steigung, berücksichtigt werden. Bei der geschilderten Anfahrsituation wird ein Schlingern um die Längsachse zu beobachten sein, da der Fahrer des Zweirads noch nicht im Gleichgewicht ist. Ebenso kann bei einer Berücksichtigung der Steigung eine Fahrsituation erkannt werden, bei der sich der Fahrer kurzzeitig aus dem Sattel erhebt, z.B. bei einem Anstieg. Durch diese Berücksichtigung kann somit auch eine langsame Bergfahrt ohne Sattelbelegung von einer besonderen Anfahrsituation unterschieden werden.

Ein weiterer Hinweis auf das Vorliegen der besonderen Anfahrsituation besteht darin, die Aktivierung des Antriebsystems zu erfassen. So kann abhängig von einem Schlüssel, mit dem das Antriebssystem oder auch nur der Antriebsmotor aktiviert wird, auf den bevorstehenden Betrieb des Antriebssystems geschlossen werden. Die gleiche Funktion erfüllt auch eine Aktivierung auf einem HMI, d.h. einem Human Machine Interface, welches bei vielen Elektrofahrrädern als Steuerung für den Elektromotor verwendet wird.

Es sei ausdrücklich darauf hingewiesen, dass alle vorstehenden Ausführungen einzeln oder Kombination verwendet werden können.

## Patentansprüche

1. Verarbeitungseinheit (100) zur Erzeugung von Ansteuersignalen eines für den elektrischen Antrieb eines Zweirads genutzten Motors (170), wobei ein Auswertemittel (110) vorgesehen ist, welches
• mittels eines Bewegungssensors (120, 140, 150, 160) eine Bewegungsgröße erfasst, insbesondere einer Geschwindigkeit, die die Bewegung des Zweirads oder eines Teils davon repräsentiert, und
• mittels eines Gewichtssensors (130) eine Gewichtsgröße erfasst, die ein Gewicht auf dem Sattel des Zweirads repräsentiert, und
• ein Ansteuersignal für den Motor (170) erzeugt,
**dadurch gekennzeichnet, dass**
das Auswertemittel das Ansteuersignal in Abhängigkeit von einer Bewegung des Zweirads und einem fehlenden Gewicht auf dem Sattel wenigstens zeitweise unterbindet.

2. Verarbeitungseinheit (100) nach Anspruch 1, **dadurch gekennzeichnet, dass** das Auswertemittel (110) das Ansteuersignal für den Motor (170) bei einer Geschwindigkeit des Zweirads von weniger als 7 km/h unterbindet.

3. Verarbeitungseinheit (100) nach Anspruch 1 oder 2, **dadurch gekennzeichnet, dass** das Auswertemittel die Ansteuerung des Motors 2 s, 5 s oder 10 s verzögert.

4. Verarbeitungseinheit (100) nach einem der vorhergehenden Ansprüche, **dadurch gekennzeichnet, dass** das Auswertemittel mittels der Ansteuersignale die Antriebsleistung des Motors (170) in wenigstens drei aufeinander folgenden Phasen steigert, wobei in einer ersten Phase eine Ansteuerung unterbunden wird, in einer zweiten Phase ein Ansteuersignal für eine gegenüber dem eingestellten Unterstützungsmodus reduzierte Antriebsleistung erzeugt wird und in einer dritten Phase die für den eingestellten Unterstützungsmodus vollständige Antriebsleistung erzeugt wird.

5. Verarbeitungseinheit (100) nach einem der vorhergehenden Ansprüche, **dadurch gekennzeichnet, dass** das Auswertemittel die zeitliche Veränderung der Bewegungsgröße und/oder der Gewichtsgröße erfasst und in Abhängigkeit der zeitlichen Veränderung das Ansteuersignal unterbindet.

6. Verarbeitungseinheit (100) nach einem der vorhergehenden Ansprüche, **dadurch gekennzeichnet, dass** das Auswertemittel das Ansteuersignal zusätzlich in Abhängigkeit des Vorliegens eines erfassten Aktivierungssignals des Antriebssystems unterbindet, insbesondere bei der Erfassung eines Aktivierungsschlüssels oder eines Pin-Codes.

7. Verfahren zur Erzeugung von Ansteuersignalen eines für den elektrischen Antrieb eines Zweirads vorgesehenen Motor (170), insbesondere zur Durchführung in einer Verarbeitungseinheit (100) bzw. einem Auswertemittel (110) nach einem der Ansprüche 1 bis 6, wobei
• eine Bewegungsgröße erfasst wird, insbesondere eine Geschwindigkeit, die die Bewegung des Zweirads oder eines Teils davon repräsentiert, und
• eine Gewichtsgröße erfasst wird, die ein Gewicht auf dem Sattel des Zweirads repräsentiert,
**dadurch gekennzeichnet, dass**
das Ansteuersignal für den Motor (170) in Abhängigkeit von einer erkannten Bewegung des Zweirads und einem fehlenden Gewicht auf dem Sattel wenigstens zeitweise unterbunden wird.

8. Verfahren nach Anspruch 7, **dadurch gekennzeichnet, dass** das Ansteuersignal für den Motor (170) bei einer Geschwindigkeit des Zweirads von weniger als 2km/h unterbunden wird.

9. Verfahren nach Anspruch 7 oder 8, **dadurch gekennzeichnet, dass** die Erzeugung und/oder die Weiterleitung des Ansteuersignals an den Motor (170) 2 s, 5 s oder 10 s verzögert wird.

10. Verfahren nach einem der Ansprüche 7 bis 9, **dadurch gekennzeichnet, dass** die Ansteuersignale derart erzeugt werden, dass die Antriebsleistung des Motors (170) in wenigstens drei aufeinander folgenden Phasen gesteigert wird, wobei in einer ersten Phase eine Ansteuerung unterbunden wird, in einer zweiten Phase ein Ansteuersignal für eine gegenüber dem eingestellten Unterstützungsmodus reduzierte Antriebsleistung erzeugt wird und in einer dritten Phase die für den eingestellten Unterstützungsmodus vollständige Antriebsleistung erzeugt wird.

11. Verfahren nach einem der Ansprüche 7 bis 10, **dadurch gekennzeichnet**, die zeitliche Veränderung der Bewegungsgröße und/oder der Gewichtsgröße erfasst wird und in Abhängigkeit der zeitlichen Veränderung das Ansteuersignal unterbunden wird.
